**Europäisches Patentamt**

**European Patent Office**

**Office européen des brevets**

(11) Publication number: **0 190 861**
**A2**

# EUROPEAN PATENT APPLICATION

(21) Application number: **86300536.9**

(22) Date of filing: **27.01.86**

(51) Int. Cl.⁴: **G 01 V 1/133**
**G 01 V 1/38**

(30) Priority: **25.01.85 GB 8501954**

(43) Date of publication of application:
**13.08.86 Bulletin 86/33**

(84) Designated Contracting States:
**FR GB NL**

(71) Applicant: **Seismograph Service (England) Limited**
**Holwood Westerham Road**
**Keston Kent, BR2 6HD(GB)**

(72) Inventor: **Breugelmans, Jacobus**
**Langenfeld Hillcrest Road**
**Biggin Hill Kent(GB)**

(72) Inventor: **Auger, Christopher David**
**Highview Hillside Lane**
**Hayes Bromley Kent, BR2 7AP(GB)**

(74) Representative: **Lynd, Michael Arthur et al,**
**STANLEY, POPPLEWELL, POOLE 57 Lincoln's Inn Fields**
**London WC2A 3LS(GB)**

(54) Marine seismic vibrator.

(57) The invention relates to a marine seismic vibrator which differs from known vibrators in being adapted to use seawater as a hydraulic liquid for generating the seismic vibrations. Preferably the seawater is used to reciprocate a piston and cylinder arrangement in a vibration generating mechanism, preferably via a hydraulic servo valve which may be controlled by an electrically operated pilot valve. Two embodiments of vibrator are described, one of modified conventional form and the other of completely novel construction. It is to be understood that the invention is applicable to any conventional marine seismic vibrator which can be modified to use seawater as its operating fluid.

FIG.1.

## A MARINE SEISMIC VIBRATOR

This invention relates to a marine seismic vibrator.

Conventionally, marine seismic vibrators employ hydraulic means to drive a vibration transmitter for transmitting vibrations to water in which the vibrator is immersed, and the hydraulic means employ oil or 'high water' based liquids. An essential requirement for such a system is that the hydraulic liquid be returned to source, e.g., to a ship normally via hose lines or the like. This requirement however presents problems in that hydraulic disadvantage may be created on return of the hydraulic liquid to the source. Moreover because of the length and flexibility of the hose lines there will be expansion and energy loss within the hose line. Additionally, if flow reversal occurs within the hose line erosion can occur within the hose which increases flow-resistance.

It is an object of the present invention to provide a marine seismic vibrator and a method of operating a marine seismic vibrator in which the problems of known marine seismic vibrators may be alleviated.

According to a first aspect of the present invention there is provided a marine seismic vibrator which includes hydraulically operable vibration generation means, which vibrator is adapted to use water as the hydraulic liquid and to discharge the water to the marine environment.

According to a second aspect of the present invention there is provided a method of operating a marine seismic vibrator, which method comprises supplying water to a marine seismic vibrator as a hydraulic liquid for driving a vibration generator thereof and discharging said water from said vibrator to the marine environment after it has passed through the vibration generator.

The marine seismic vibrator of the present invention may be any conventional marine service vibrator suitably adapted to cope with the particular problems raised by the use of water, e.g., seawater as the hydraulic liquid. Such problems include a) the need to filter extremely thoroughly the incoming water to remove matter entrained therewith e.g., sand or marine organisms; b) the need to employ much greater working tolerances in the hydraulic mechanisms than hitherto employed because of the poor lubricating properties of water; and c) the need to use seals of suitable material e.g., graphite or compressed carbon, which will be effective in the presence of water and in the absence of lubricating hydraulic oil.

The water may be discharged to the sea from the marine seismic vibrator directly after it has passed through the vibrator or may be discharged to the sea via a diffuser.

Embodiments of marine seismic vibrators according to the present invention and for use in the method of the present invention will now be described, by the way of example only, by reference to the accompanying drawings, in which,

Fig 1. is a diagrammatic cross section of marine seismic vibrator according to present invention, and

Fig 2. is a diagrammatic representation of an arrangement for driving a different embodiment of marine seismic vibrator.

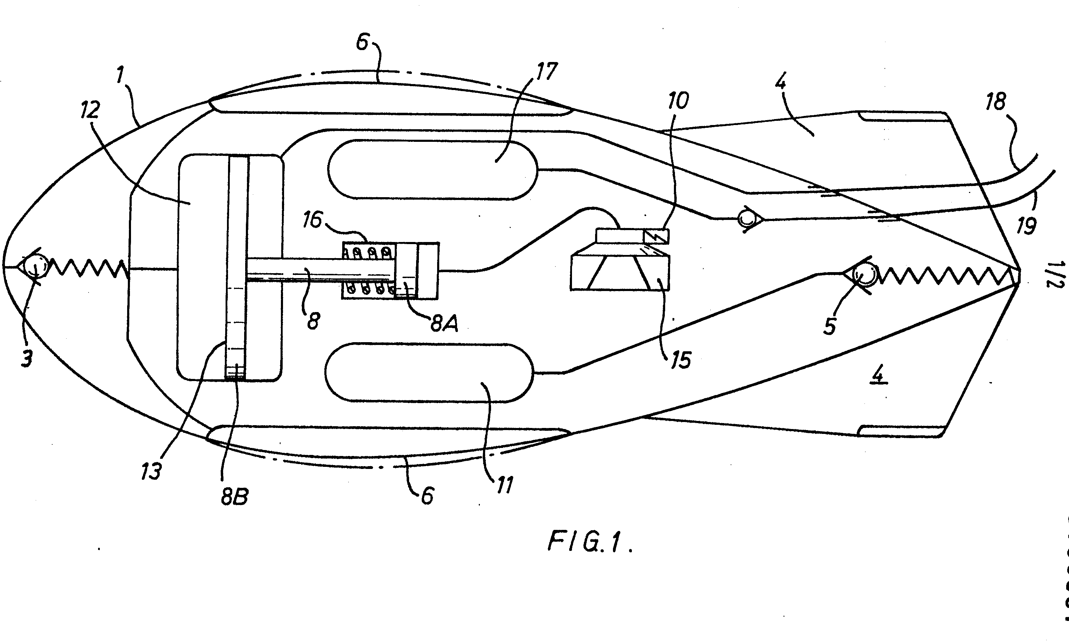

Referring to Fig.1. of the drawings, there is shown a marine seimic vibrator or transducer. The construction of this vibrator will not be described in detail since it forms the subject of a copending Patent Application. However, it will be seen that a marine seismic transducer 1 comprises a steamlined outer casing 2, provided at its front end with a spring-loaded one-way valve 3 and at its rear end with guide fins 4 and a further spring-loaded one-way valve 5. A generally cylindrical sleeve 6 of flexible material e.g., rubber or neoprene, forms part of the outer surface of the transducer 1 and is secured to the outer casing 2 at the peripheries of the sleeve 6.

Within the transducer 1 there is provided a hydraulic cylinder containing lightweight doubt piston 8 (formed from e.g., duralumin). The double piston 8 comprises two axially arranged pistons 8A and 8B, piston 8A being a high pressure, small surface area piston acted upon by hydraulic fluid and piston 8B being a low pressure large surface area piston acting upon seawater within the transducer 1. Any suitable circuitry may be employed to reciprocate the piston 8 within the hydraulic cylinder; in the arrangement shown a three way hydraulic main valve 15 is employed, operated by sea water supplied from an external source not shown via high pressure seawater supply line 19. The main valve 15 controls the movement of piston 8A which piston is itself a double sided piston each side being of equal surface area. The hydraulic main valve 15 is controlled by an electrically operated pilot valve 10.

The space behind the piston 8 is filled with air at ambient or above ambient pressure (to balance or to pre-pressurize the diaphragm 6 and to act as a cushion for the return stroke of the piston 8) supplied by an air line 18 from a low pressure compressor. Accumulators for damping surge during charge and discharge of the cylinder are provided respectively designated as 17 and 11. The accumulators have the effect of smoothing the output at low frequencies and of absorbing excess energy.

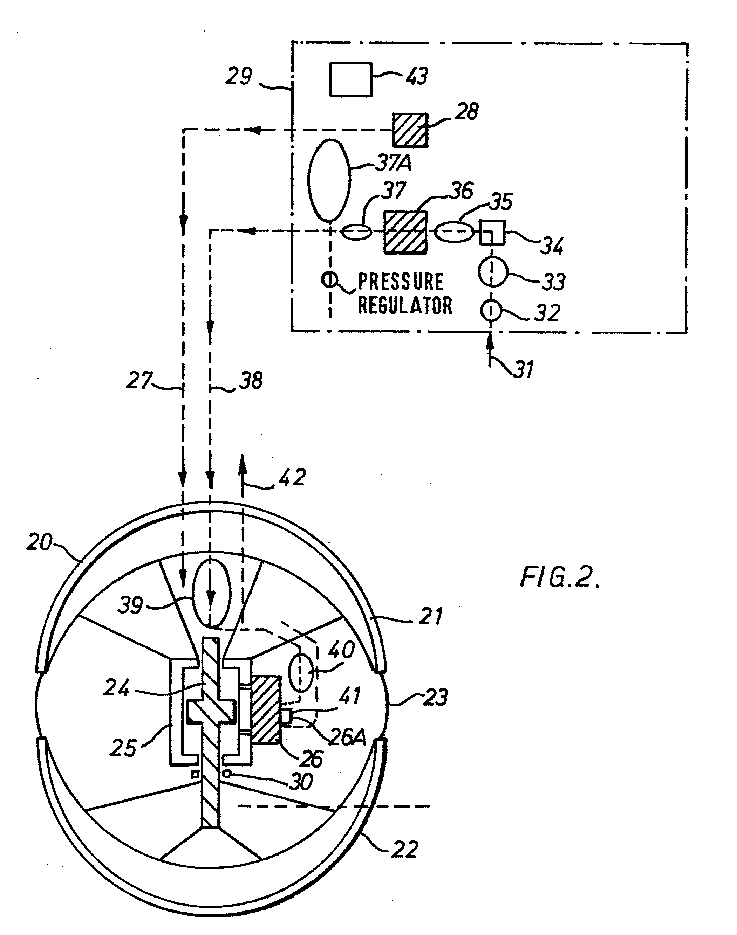

Referring now to the arrangement shown in Fig 2. of the drawings, there is shown a schematic marine seismic vibrator 20, comprising upper and lower shells, 21 and 22 respectively, joined by means of a flexible joint 23. Contained within the vibrator 20 is a double acting piston 24 within a cylinder 25.

One end of piston 24 is connected to lower shell 22 while cylinder 25 is connected to upper shell 21 so that reciprocal movement of piston 24 within cylinder 25 will cause corresponding reciprocal movement of shell 21 relative to shell 22, and vibrations will be produced. Piston 24 and cylinder 25 are arranged to be controlled by hydraulic servo valve 26 and electrically operable valve 26A.

The general interior volume of vibrator 20 is arranged to /be pressurized with low pressure air to balance the external water pressure, via line 27 from compressor 28 mounted upon ship 29. A position feedback 30 is provided surrounding piston 24 for relaying information as to the instantaneous position of said piston 24.

Seawater is supplied to the vibrator 20, from a seawater intake 31, via a low pressure seawater precharge pump 32, a hydrocylone or centrifugal type water filter 33, a mesh filter 34, a low pressure desurger (i.e., an accumulator) 35, a high pressure water pump 36, a a high pressure desurger, high pressure accumulator 37A high pressure umbilical line 38, a large hydraulic accumulator/desurger 39 located within the vibrator 20 for smoothing flow in the umbilical and via a small accumulator/desurger 40 within the vibrator 20 for aiding high frequency flow. A separate filter 41 is provided upstream of the servo valve 26.

A discharge port 42 is provided on the vibrator 20 for discharge to the sea of seawater which has passed through the vibrator 20.

Means 43 are provided for controlling the frequency of vibration of vibrator 20, which means will generally include electrical drive circuitry for the hydraulic servo valve 26, incorporating piston position feedback information from transducer 30, and phase lock feedback from a hydrophone (not shown) placed close to vibrator 20.

It will be appreciated that the marine vibrator of the present invention and the method of the invention employing a marine vibrator affords several advantages over the prior art as heretofore discussed. It is a further to be understood that the invention is applicable to any conventional marine seismic vibrator which can be modified to use seawater    its operating fluid.

CLAIMS

1)   A Marine Seismic Vibrator which includes hydraulically operable vibration generator means, which vibrator is adapted to use seawater as the hydraulic liquid and to discharge the seawater to the marine environment.

2)   A vibrator according to Claim 1, wherein said generator means include a hydraulic piston and cylinder arranged for relative reciprocal movement and adapted to use seawater as the hydraulic liquid.

3.)  A vibrator according to Claim 2, wherein the generator means includes a servo valve for supplying seawater to said piston and cylinder and an electrically operable pilot valve for controlling movement of said servovale.

4.)  A vibrator according to any preceding claim, adapted to use filtered seawater.

5.)  A vibrator according to any preceding Claim, which includes one or more accumulators for the seawater, for smoothing or assisting flow of the seawater.

6.)  A marine seismic vibrator substantially as heretofore described with reference to Fig 1 or Fig 2 of the accompanying drawings.

7.)  A method of operating a marine seismic vibrator wherein seawater is used as a hydraulic liquid for generating seismic vibrations and wherein the seawater is discharged to the sea after use.

8) A method according to Claim 7, wherein the seawater is filtered before use.

9) A method according to Claim 8, wherein the seawater is passed through one or more of a hydrocyclone filter, a centrifugal filter and a mesh filter, before use.

10) A method according to Claim 7 or 8, wherein the seawater is supplied to a reciprocal piston and cylinder device within the vibrator via an electrically controlled servo valve.

11) A method of operating a marine seismic vibrator, substantially as heretofore described with reference to Fig 1 or Fig 2 of the accompanying drawings.

0190861

FIG.1.

2/2

0190861

FIG.2.